# EUROPEAN PATENT APPLICATION

(11) **EP 3 614 186 A1**
(43) Date of publication of application: **26.02.2020**
(21) Application number: 18386026.1
(22) Date of filing: 24.08.2018
(51) Int. Cl.: G02B 6/42, G02B 6/122, G02B 6/30

(54) **OPTICAL INTERCONNECT**

(71) Applicant: Mellanox Technologies, Ltd., 2069200 Yokneam (IL)
(72) Inventor: Aharon, Eran, Tel Aviv (IL); Kalavrouziotis, Dimitrios, 15669 Papagou (GR); Bakopoulos, Paraskevas, 13123 Ilion (GR); Mentovich, Elad, 6935715 Tel Aviv (IL)
(74) Representative: Kramer, Dani

(57) **Abstract**

An optical interconnect and associated method of manufacturing are provided. The optical interconnect includes a substrate and an optoelectronic component supported by the substrate that converts between optical and electrical signals. The optical interconnect further includes a transmission block that defines a receiving surface that receives an optical fiber, and a waveguide that transmits optical signals between the optoelectronic component and the receiving surface such that in an operational configuration in which the receiving surface receives an optical fiber, the optoelectronic component and the optical fiber are in optical communication. The waveguide defines a first adiabatic transition profile adjacent the optoelectronic component that facilitates transmission of optical signals between the waveguide and the optoelectronic component, and a second adiabatic transition profile adjacent the receiving surface that facilitates transmission of optical signals between the waveguide and the optical fiber.

## Description

### TECHNOLOGICAL FIELD

Example embodiments of the present invention relate generally to communications systems and, more particularly, to optical interconnects that are designed to provide improved accuracy.

### BACKGROUND

Communications systems often utilize a variety of optical, electrical, and mechanical components in order to provide for the transmission of high bandwidth signals. With optical communications systems, maintaining alignment between optoelectronic components and associated transmission mediums (e.g., optical fibers, optical waveguides, and the like) is often difficult given the relatively small size of the associated alignment regions of these components. Traditional methods for coupling these components may also result in the misalignment of the optoelectronic components such that optical signals transmitted by these elements suffer from signal degradation or are otherwise unreliable.

### BRIEF SUMMARY

An optical interconnect and associated method of manufacturing are disclosed herein for improved optical coupling. In one embodiment, an optical interconnect for improved optical coupling is provided. The optical interconnect may include a substrate and an optoelectronic component supported by the substrate and configured to convert between optical and electrical signals. The optical interconnect may further include a transmission block defining a receiving surface configured to receive an optical fiber, and a waveguide configured to transmit optical signals between the optoelectronic component and the receiving surface such that in an operational configuration in which the receiving surface receives an optical fiber, the optoelectronic component and the optical fiber are in optical communication. The waveguide may further define a first adiabatic transition profile adjacent the optoelectronic component configured to facilitate transmission of optical signals between the waveguide and the optoelectronic component, and a second adiabatic transition profile adjacent the receiving surface configured to, in the operational configuration, facilitate transmission of optical signals between the waveguide and the optical fiber.

In some embodiments, the first adiabatic transition profile may define a first cross-section proximate the optoelectronic component and a second cross-section distal the optoelectronic component. In such an embodiment, the second cross-section may be larger than the first cross-section such that the first adiabatic transition profile tapers along a length of the waveguide from the second cross-section to the first cross-section.

In some cases, the second adiabatic transition profile may define a first cross-section proximate the receiving surface and a second cross-section distal the receiving surface. In such an embodiment, the second cross-section may be larger than the first cross-section such that the second adiabatic transition profile tapers along a length of the waveguide from the second cross-section to the first cross-section.

In some further embodiments, the optical interconnect may include a reflective surface disposed between the first adiabatic transition profile and the second adiabatic transition profile. In such an embodiment, in the operational configuration, the reflective surface may be configured to redirect optical signals between the optoelectronic component and the receiving surface by approximately 90°.

In some cases, the receiving surface may further define a V-shaped groove configured, in the operational configuration, to position the optical fiber relative to the second adiabatic transition profile.

In some cases, the transmission block further includes a cutout region proximate the optoelectronic component. In such an embodiment, the optical interconnect may further include one or more wire bonds in electrical communication with the optoelectronic component disposed within the cutout region of the transmission block.

In some cases, the transmission block may be secured to the substrate. In some other cases, the optoelectronic component and substrate may be configured as a flip-chip component such that a longitudinal axis of the first adiabatic transition profile and a longitudinal axis of the second adiabatic transition profile are collinear.

The above summary is provided merely for purposes of summarizing some example embodiments to provide a basic understanding of some aspects of the invention. Accordingly, it will be appreciated that the above-described embodiments are merely examples and should not be construed to narrow the scope or spirit of the invention in any way. It will be appreciated that the scope of the invention encompasses many potential embodiments in addition to those here summarized, some of which will be further described below.

### BRIEF DESCRIPTION OF THE DRAWINGS

Having described certain example embodiments of the present disclosure in general terms above, reference will now be made to the accompanying drawings. The components illustrated in the figures may or may not be present in certain embodiments described herein. Some embodiments may include fewer (or more) components than those shown in the figures.
FIG. 1 is a perspective view of an optical interconnect receiving an optical fiber according to an example embodiment;
FIG. 2 is a top view of the optical interconnect of FIG. 1;
FIG. 3 is a side view of the optical interconnect of FIG. 1 including magnified portions illustrating a reflective surface and adiabatic transition profiles according to an example embodiment;
FIGS. 4A-4B are side views of a first adiabatic transition profile and a second adiabatic transition profile, respectively, according to an example embodiment;
FIG. 5 is a perspective view of an optical interconnect receiving an optical fiber in a flip-chip configuration according to an example embodiment;
FIG. 6 is a side view of the optical interconnect of FIG. 5;
FIGS. 7A-7B are side views of a first adiabatic transition profile and a second adiabatic transition profile, respectively, of the optical interconnect of FIG. 5, according to an example embodiment; and
FIG. 8 is a flowchart illustrating a method of manufacturing an optical interconnect for receiving optical fibers according to an example embodiment.

### DETAILED DESCRIPTION

### Overview

The present invention now will be described more fully hereinafter with reference to the accompanying drawings in which some but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout. As used herein, terms such as "front," "rear," "top," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

Additionally, an optoelectronic component is described herein for converting between optical and electrical signals (e.g., a transducer, transceiver, etc.). For the sake of clarity and convenience of description, the embodiments that are described refer to a vertical-cavity surface-emitting laser (VCSEL) as the optoelectronic component. The principles of the present invention, however, may be equally applicable to other types of emitters, photodiodes, or other optoelectronic elements that receive/transmit optical signals and are configured to convert between optical and electrical signals.

Optical communications systems often use various transceiver modules, laser diodes, and other related optoelectronic components, such as VCSELs, in order to transmit optical signals. These optoelectronic components and associated modules may be incorporated into datacenter networks so as to provide connections between switch systems, servers, and other network components. By way of example, a datacenter rack may receive switch modules connected via optical fibers where each switch module includes various optoelectronic components for transmitting, receiving, and converting optical/electrical signals.

As noted above, the coupling of the optoelectronic components within the switch modules with a respective optical fiber often results in the misalignment of these components. As would be understood by one of ordinary skill in the art in light of the present disclosure, creating proper alignment between optoelectronic components is necessary to minimize signal degradation or other interference in order to produce effective optical communication. Accordingly, embodiments of the present invention described herein provide an optical interconnect and associated methods of manufacturing that provide increased accuracy and precision in component alignment so as to reduce signal degradation or other interference by utilizing non-traditional adiabatic transition profiles.

### Optical Interconnect

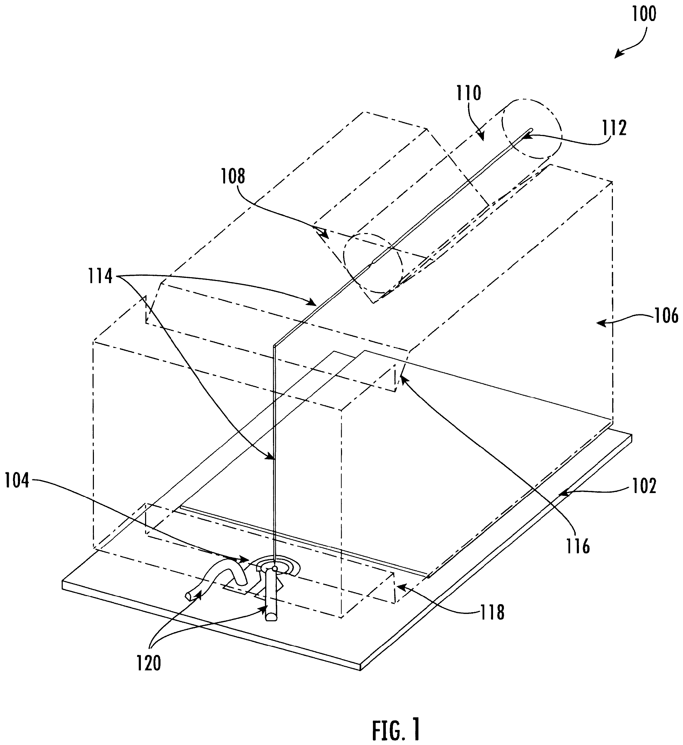

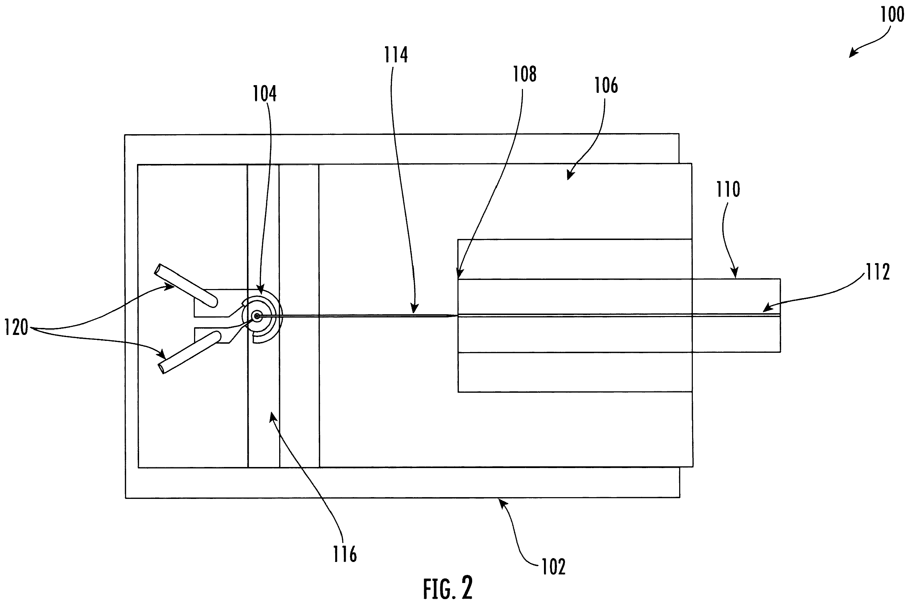

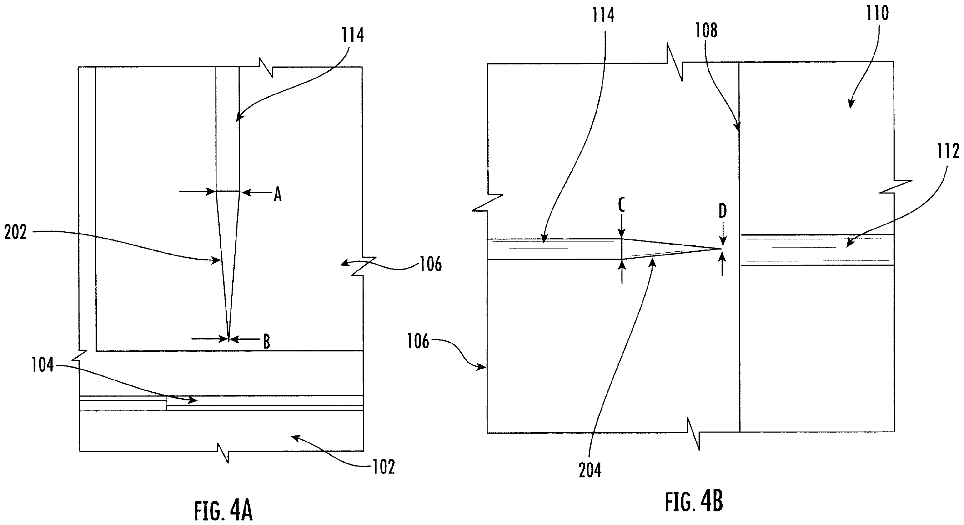

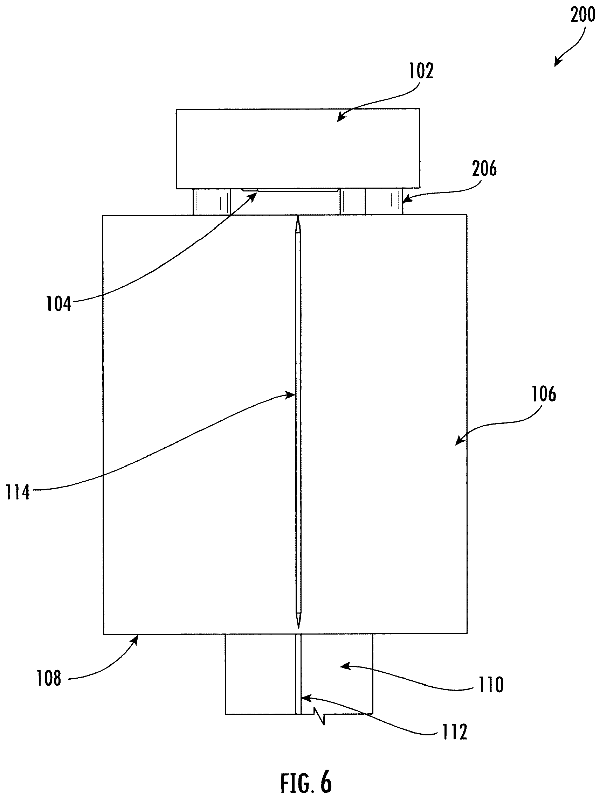

With reference to FIGS. 1-2, an example optical interconnect 100 is illustrated. As shown, the optical interconnect 100 may include a substrate 102 supporting an optoelectronic component 104 (e.g., VCSEL, photodiode, etc.). The optical interconnect 100 may further include a transmission block 106 configured to receive an optical fiber 110 via a receiving surface 108 and further configured to direct optical signals via a waveguide 114. Embodiments of the optical interconnect 100 are illustrated herein in an operational configuration in which an optical fiber 110 is in optical communication with the optoelectronic component 104 via various elements of the transmission block 106 described hereafter. While FIGS. 1-7B described more fully hereafter illustrate and describe an optical fiber 110 and a fiber core 112 each having a circular cross-sectional shape, the present disclosure contemplates that the optical interconnects 100 of the present application may be applicable to any optical transmission medium or waveguide through which an optical signal may be transmitted.

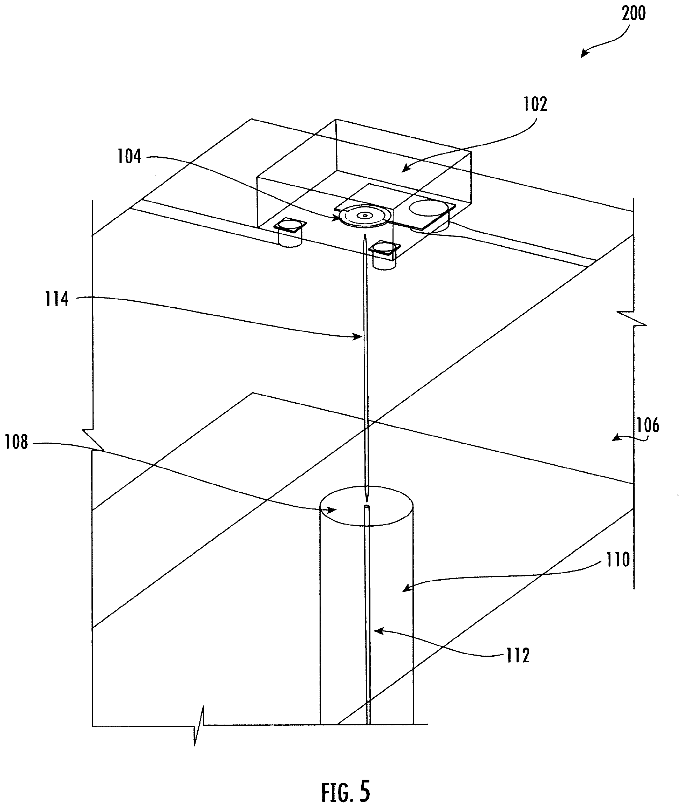

With continued reference to FIGS. 1-2, the substrate 102 may comprise a printed circuit board (PCB) configured to provide electrical communication to various optoelectronic components (e.g., optoelectronic component 104) supported thereon. As would be evident to one of ordinary skill in the art in light of the present disclosure, the substrate 102 (e.g., PCB) may, in some embodiments, comprise a dielectric material. In other embodiments, such as those described with the flip-chip variant of FIG. 5, the substrate (e.g., PCB) may be operationally required to comprise a material transparent to light. As illustrated, the substrate 102 may support the optoelectronic component 104 such that the optoelectronic component 104 may be aligned with a corresponding waveguide (e.g., waveguide 114) defined by the transmission block 106. As described more fully hereafter, a waveguide (e.g., waveguide 114) refers to an optical pathway or other structure defined by the transmission block 106 through which optical signals (e.g., light) may be transmitted. As would be evident to one of ordinary skill in the art in light of the present disclosure, the transmission block 106 and waveguide defined therein may comprise a glass material, a polymer material, an amorphous material, or the like (e.g., any dielectric material in which waveguide structures may be etched). As described above, the optical interconnect 104 may also comprise a VCSEL or photodiode configured to transmit or receive optical signals, respectively, and may further be configured to convert between optical and electrical signals. In some embodiments, as shown in FIGS. 1-2, the optoelectronic component 104 may be in electrical communication with other networking components (e.g., microcontrollers, drivers, computer systems, etc.) (not shown) via one or more wire bonds 120.

While the present disclosure illustrates and describes the optical interconnect 100 without a housing or other protective casing, as would be understood by one of ordinary skill in the art in light of the present disclosure, some or all of the optical interconnect 100 may be supported or enclosed by any housing used in communications systems to protect the components supported therein (e.g., as part of Quad Small Form-factor Pluggable (QSFP) connectors, Small Form Pluggable (SFP) connectors, or the like). Furthermore, while the substrate 102 is illustrated herein as having a substantially rectangular shape, the present disclosure contemplates that the substrate 102 may be dimensioned (e.g., sized and shaped) for use in any communication system regardless of geometric constraints (e.g., L-shaped, squared-shaped, etc.).

With continued reference to FIGS. 1-2, the optical interconnect 100 may include a transmission block 106. As shown, the transmission block 106 may, in some embodiments, be secured to the substrate 102 (e.g., via an adhesive, soldering, etc.) so as to secure the position of the waveguide 114 described hereafter with respect to the optoelectronic component 104. The transmission block 106 may also define a receiving surface configured to receive an optical fiber 110. As described above, in an operational configuration, the receiving surface 108 may receive an optical fiber 110 such that optical signals may be transmitted by the optical fiber 110 (e.g., via the fiber core 112). The transmission block 106 may further define a waveguide 114 configured to transmit optical signals between the optoelectronic component 104 and the receiving surface 108. The waveguide 114 may further be configured such that, in an operational configuration in which the receiving surface 108 receives an optical fiber 110, the optoelectronic component 104 and the optical fiber 110 are in optical communication.

By way of example, the optoelectronic component 104 may receive an electrical signal from a microcontroller (not shown) via the one or more wire bonds 120. The optoelectronic component 104 (e.g., a VCSEL) may convert the electrical signal to a corresponding optical signal and may transmit the optical signal into the waveguide 114 defined by the transmission block 106. The waveguide 114 may transmit the optical signal from the optoelectronic component 104 to the optical fiber 110 received by the receiving surface 108 (e.g., in the operational configuration). Similarly, in the operational configuration, an optical signal transmitted by the optical fiber 110 via the fiber core 112 (e.g., generated via a VCSEL located on an opposing end of the optical fiber 110) may be received by the transmission block at the receiving surface 108. The optical signal may be transmitted by the waveguide 114 to the optoelectronic component 104 (e.g., a photodiode) and converted from an optical signal to a corresponding electrical signal by the optoelectronic component 104 (e.g., the photodiode). The corresponding electrical signal may be transmitted by the one or more wire bonds 120 to the microcontroller (not shown).

In some embodiments, the transmission block 106 may further define a cutout region 118 proximate the optoelectronic component 104. The cutout region 118 may be, for example, a region of the transmission block 106 where a portion of the transmission block material has been removed or where the transmission block has been formed to provide a space between the transmission block and the substrate 102. In such an embodiment, the cutout region 118 may be configured to accommodate the one or more wire bonds 120 in electrical communication with the optoelectronic component 104. Said differently, the one or more wire bonds 120 may be disposed within the cutout region 118 of the transmission block 106. While the transmission block 106 is illustrated herein with a cutout region 118 having a substantially rectangular shape proximate the optoelectronic component 104, the present disclosure contemplates that the transmission block may further define any number of recessed or protruding portions and may be dimensioned (e.g., sized and shaped) to accommodate any element used communication systems regardless of geometric constraints.

As shown in FIGS. 1-2, in some embodiments, the receiving surface 108 may define a V-shaped groove configured, in the operational configuration, to position the optical fiber 110 relative to the waveguide 114 (e.g., in particular relative to a second adiabatic transition profile 204 described hereafter). In such an embodiment, the V-shaped groove may be dimensioned (e.g., sized and shaped) such that the fiber core 112 of the optical fiber 110 is substantially aligned with the waveguide 114 such that an optical signal transmitted via the fiber core 112 may be received by the waveguide 114 at the receiving surface 108. While described herein with reference to a V-shaped groove defined by the receiving surface 108, the present disclosure contemplates that the receiving surface 108 may define any alignment feature such that optical communication between the optoelectronic component 104 and the fiber core 112 (e.g., via the waveguide 114) is promoted and maintained.

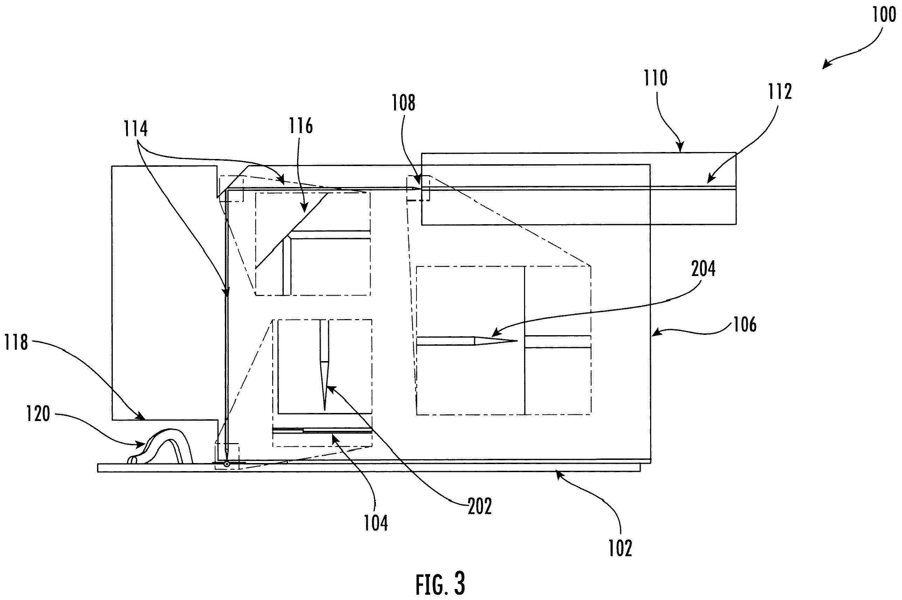

With reference to FIGS. 3-4B, in some embodiments, the waveguide 114 may further define a first adiabatic transition profile 202 and a second adiabatic transition profile 204. The first adiabatic transition profile 202 may include a portion of the waveguide 114 adjacent the optoelectronic component 104 and may be configured to optimize optical coupling efficiency of optical signals between the waveguide 114 and the optoelectronic component 104. In some embodiments, the first adiabatic transition profile 202 defines a first cross-section proximate the optoelectronic component 104 and a second cross-section distal the optoelectronic component 104. In such an embodiment, the second cross-section may be larger than the first cross-section such that the first adiabatic transition profile 202 tapers along a length of the waveguide 114 from the second cross-section to the first cross-section. In an instance in which the waveguide 114 includes a circular cross-section, for example, the first adiabatic transition profile 202 may form a conical shape that tapers along a length of the waveguide 114 such that the conical shape terminates at a point, an approximation of a point, or any finite width adjacent the optoelectronic component 104. In such an embodiment, the diameter of the waveguide 114 at the second cross-section (e.g., cross-section A) of the first adiabatic transition profile 202 may be greater than the diameter of the waveguide 114 at the first cross-section (e.g., cross-section B) of the first adiabatic transition profile 202. While described herein with reference to a circular cross-sectional shape and a corresponding conical tapered shape, the present disclosure contemplates that the first adiabatic transition profile 202 may define a tapered profile of any shape (e.g., elliptical, rectangular, etc.).

With continued reference to FIGS. 3-4B, the second adiabatic transition profile 204 may include a portion of the waveguide 114 adjacent the receiving surface 108 and, in the operational configuration, may be configured to facilitate transmission of optical signals between the waveguide 114 and the optical fiber 110 (e.g., the fiber core 112) via the receiving surface 108. In some embodiments, the second adiabatic transition profile 204 defines a first cross-section proximate the receiving surface 108 and a second cross-section distal the receiving surface 108. In such an embodiment, the second cross-section may be larger than the first cross-section such that the second adiabatic transition profile 204 tapers along a length of the waveguide 114 from the second cross-section to the first cross-section. As described above, in an instance in which the waveguide 114 includes a circular cross-section, the second adiabatic transition profile 204 may form a conical shape that tapers along a length of the waveguide 114 such that the conical shape terminates at a finite width adjacent the receiving surface 108. In such an embodiment, the diameter of the waveguide 114 at the second cross-section (e.g., cross-section C) of the second adiabatic transition profile 204 may be greater than the diameter of the waveguide 114 at the first cross-section (e.g., cross-section D) of the second adiabatic transition profile 204. While described herein with reference to a circular cross-sectional shape and a corresponding conical tapered shape, the present disclosure contemplates that the second adiabatic transition profile 204 may define a tapered profile of any shape (e.g., elliptical, rectangular, etc.).

As would be evident to one of ordinary skill in the art in light of the present disclosure, adiabatic transition profiles (e.g., the first adiabatic transition profile 202 and the second adiabatic transition profile 204) as described and claimed provide structurally distinct features not found in traditional optical interconnects. In particular, traditional coupling between optical elements (e.g., butt coupling) requires a field emission between edges of the waveguide to accomplish a fiber to fiber coupling. The use of the adiabatic transition profiles of embodiments of the present invention, however, introduces a tapering cross-section of the waveguide profile (e.g., waveguide 114) along a propagation direction of the waveguide 114. In this way, the first adiabatic transition profile 202 provides more accurate alignment (e.g., high misalignment tolerance and improved mode matching) between the optoelectronic component 104 and the waveguide 114 as compared to conventional coupling mechanisms. In some embodiments, the distance between the first adiabatic transition profile 202 and the optoelectronic component 104 may be as small as 20 microns. Similarly, the second adiabatic transition profile 204 provides more accurate alignment (e.g., high misalignment tolerance and improved mode matching) between the waveguide 114 and the optical fiber 110 (e.g., fiber core 112) via the receiving surface 108 as compared to conventional coupling mechanisms. In some embodiments, the distance between the second adiabatic transition profile 204 and the receiving surface 108 may be as small as 20 microns.

While the first adiabatic transition profile 202 and the second adiabatic transition profile 204 are described herein as tapered regions of the waveguide 114 having circular cross-sectional shapes, the present disclosure contemplates that each of the first adiabatic transition profile 202 and the second adiabatic transition profile 204 may be dimensioned (e.g., sized and shaped) to optimize the coupling of the waveguide 114 with the optoelectronic component 104 and the optical fiber 110, respectively. For example, a multimode fiber optical cable traditionally defines a larger diameter than a single mode optical fiber cable such that multiple modes of light may propagate along the multimode cable. In this way, the first adiabatic transition profile 202 and the second adiabatic transition profile 204 may be shaped differently (with respect to each other) depending upon the required optical fiber 110 received by the receiving surface 108.

In some embodiments, as shown in the magnified portion of FIG. 3, the waveguide 114 may include a reflective surface 116 (e.g., a mirror) disposed between the first adiabatic transition profile 202 and the second adiabatic transition profile 204. In this way, the reflective surface 116 may be configured to redirect optical signals between the optoelectronic component 104 and the receiving surface 108. In some embodiments, as shown in FIG. 3, the reflective surface 116 may be configured to redirect optical signals between the optoelectronic component 104 and the receiving surface 108 by approximately 90°. While described herein with reference to a single reflective surface 116 for redirecting optical signals approximately 90°, the optical interconnect 100 of the present disclosure may further include any number of reflective surfaces 116 having any orientation so as to redirect optical signals between the receiving surface 108 and the optoelectronic component 104 at any desired angle.

With reference to FIGS. 5-6, an optical interconnect 200 for receiving an optical fiber 110 is illustrated in a flip-chip configuration. As shown, the optical interconnect 200 may also include a substrate 102 supporting an optoelectronic component 104 (e.g., VCSEL, photodiode, etc.). The optical interconnect 200 may further include a transmission block 106 configured to receive an optical fiber 110 via a receiving surface 108 and further configured to direct optical signals via a waveguide 114. Said differently, in the flip-chip configuration of FIGS. 5-6, the transmission block 106 operates as the PCB in that the PCB is a transparent material that can support waveguides as well as electronic circuitry. As above, embodiments of the optical interconnect 200 are illustrated in an operational configuration in which an optical fiber 110 is received by the receiving surface 108 such that the optical fiber 110 (e.g., fiber core 112) is in optical communication with the optoelectronic component 104 via the waveguide 114.

As would be evident to one of ordinary skill in the art in light of the present disclosure, a flip-chip configuration refers to an orientation of the substrate 102 and the optoelectronic component 104 (e.g., "face down") such that the substrate 102 is connected to the transmission block via soldering bumps 206 as opposed to wire bonds (e.g., the wire bonds 120 in FIGS. 1-3). In such a flip-chip configuration, the substrate 102, the optoelectronic component 104, the waveguide 114, and the optical fiber 110 received via the receiving surface 108 may be collinear. Such an orientation may provide for an optical interconnect 200 that is smaller than a carrier-based system and may provide for shorter free-space propagation distances as compared to conventional flip-chip components.

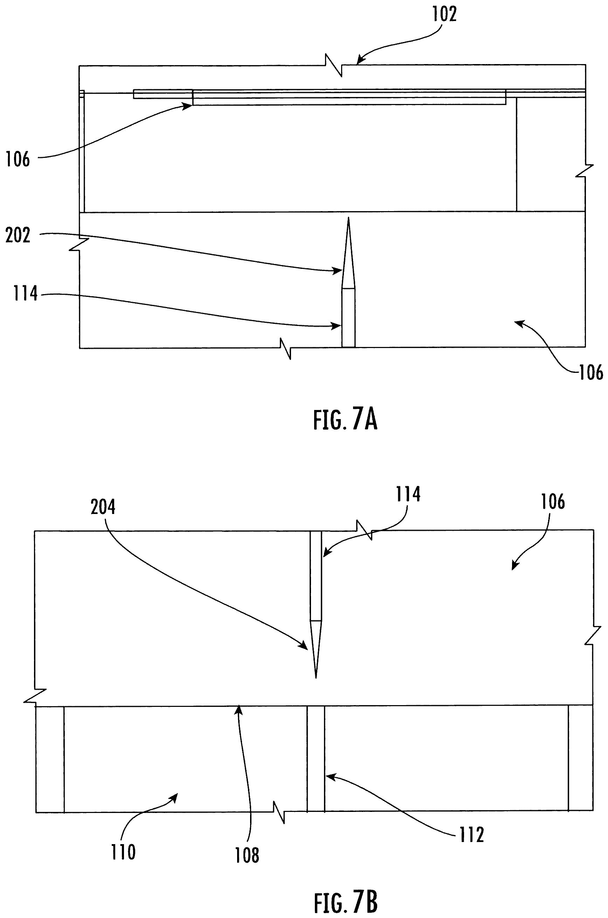

With reference to FIGS. 7A-7B, the transmission block 106 of the optical interconnect 200 may define a waveguide 114 configured to provide optical communication between the optoelectronic component 104 and the receiving surface 108 (e.g., in a flip-chip configuration). As described above, the waveguide 114 may further define a first adiabatic transition profile 202 and a second adiabatic transition profile 204. The first adiabatic transition profile 202 may include a portion of the waveguide 114 adjacent the optoelectronic component 104 and may be configured to optimize optical coupling efficiency of optical signals between the waveguide 114 and the optoelectronic component 104. In some embodiments, the first adiabatic transition profile 202 may define a first cross-section proximate the optoelectronic component 104 and a second cross-section distal the optoelectronic component 104. In such an embodiment, the second cross-section may be larger than the first cross-section such that the first adiabatic transition profile 202 tapers along a length of the waveguide 114 from the second cross-section to the first cross-section, as described in connection with the transmission block 106 of FIGS. 3-4B above.

Similarly, the second adiabatic transition profile 204 may include a portion of the waveguide 114 adjacent the receiving surface 108 and, in the operational configuration, may be configured to optimize optical coupling efficiency of optical signals between the waveguide 114 and the optical fiber 110 (e.g., the fiber core 112) via the receiving surface 108. In some embodiments, the second adiabatic transition profile 204 may define a first cross-section proximate the receiving surface 108 and a second cross-section distal the receiving surface 108. In such an embodiment, the second cross-section may be larger than the first cross-section such that the second adiabatic transition profile 204 tapers along a length of the waveguide 114 from the second cross-section to the first cross-section. In the illustrated embodiment of FIGS. 5-7B in which the optical interconnect 200 is configured as a flip-chip component, a longitudinal axis of the first adiabatic transition profile 202 and a longitudinal axis of the second adiabatic transition profile 204 may be collinear. Said differently, the orientation of the optical interconnect 200 in such an embodiment does not require a mirror or other reflective surface (e.g., reflective surface 116 in FIG. 3) to redirect optical signals between the optoelectronic component 104 and the receiving surface 108. As would be evident to one of ordinary skill in the art in light of the present disclosure, however, the optical interconnect 200 in a flip-chip configuration may also include one or more mirrors (e.g., reflective surfaces) to accommodate optical fibers received at varying angles. In some optical interconnect embodiments, only mirrors may be operationally configured to redirect light given that at some bending radii, light may remain confined to the waveguide.

### Example Method of Manufacture

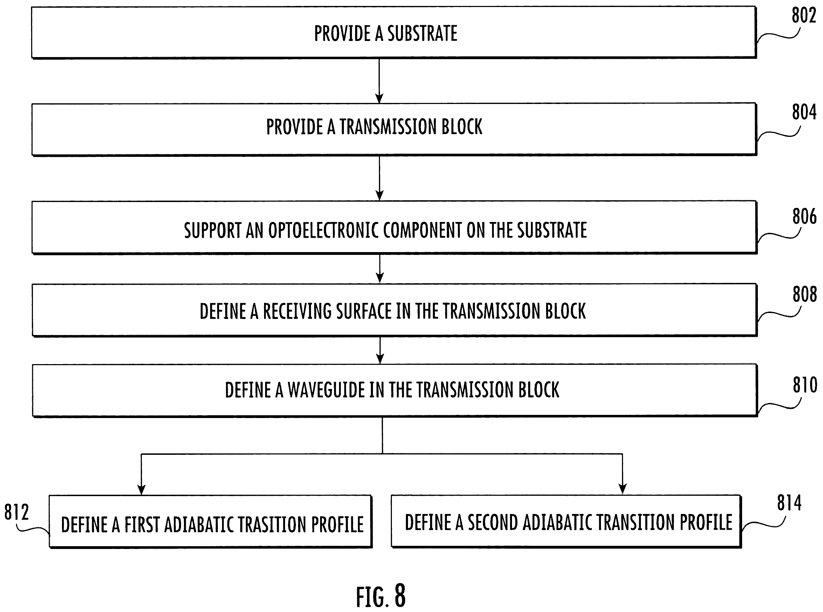

With reference to FIG. 8, a method of manufacturing an optical interconnect according to example embodiments of the invention is illustrated. The method (e.g., method 800) may include the steps of providing a substrate (e.g., a printed circuit board (PCB)) at Block 802 and providing a transmission block at Block 804. The method 800 may utilize any known means for creating substrates or PCBs (e.g., subtractive processes, additive processes, semi-additive processes, chemical etching, copper patterning, lamination, plating and coating, or the like) in providing the substrate at Block 802. In some embodiments, the method may provide a transmission block at Block 804 that comprises a glass material such that optical signals (e.g., light) may be transmitted therethrough (e.g., via the waveguide described hereafter at Block 810). While described herein with reference to a glass material, the present disclosure contemplates that any other material for transmitting optical signals (e.g., polymers, amorphous materials, etc.) may also be used for the transmission block provided at Block 804.

The method 800 may further include supporting an optoelectronic component on the substrate at Block 806. As described above, the substrate may support the optoelectronic component such that the optoelectronic component may be aligned with a corresponding waveguide (e.g., defined hereafter at Block 810) defined by the transmission block. As described above, the optical interconnect may comprise a VCSEL or photodiode configured to transmit or receive optical signals, respectively, and may further be configured to convert between optical and electrical signals. In some embodiments the optoelectronic component supported by the substrate may be in electrical communication with other networking components (e.g., microcontrollers, drivers, computer systems, etc.) via one or more wire bonds. In other embodiments, the optoelectronic component may be supported by the substrate but further attached to the transmission block in a flip-chip configuration.

The method 800 may further include defining a receiving surface in the transmission block at Block 808. As described above, in an operational configuration, the receiving surface may receive an optical fiber such that optical signals may be transmitted by the optical fiber. In some embodiments, defining the receiving surface my further include defining a V-shaped groove configured, in the operational configuration, to position the optical fiber relative to a waveguide defined by the transmission block (e.g., described hereafter at Block 810). In such an embodiment, defining the V-shaped groove may include dimensioning (e.g., sizing and shaping) the V-shaped groove such that a fiber core of the optical fiber received by the receiving surface in the operational configuration is substantially aligned with the waveguide.

The method 800 may further include defining a waveguide in the transmission block at Block 810. The defined waveguide may be configured to transmit optical signals between the optoelectronic component supported by the substrate and the receiving surface defined by the transmission block. The waveguide defined at Block 810 may further be configured such that, in an operational configuration in which the receiving surface receives an optical fiber, the optoelectronic component and the optical fiber are in optical communication. As would be evident to one of ordinary skill in the art in light of the present disclosure, the waveguide may be defined in the glass transmission block via an etching or inscription process. By way of example, a laser etching process may be used to define the waveguide at Block 810, and associated adiabatic transition profiles defined hereafter, such that optical signals (e.g., light) may be directed by the waveguide between the optoelectronic component and the receiving surface. While described with reference to a laser etching process used to define the waveguide at Block 810, the present disclosure contemplates that any other method for creating optical waveguides (e.g., chemical etching, inscription, machining, or the like) may be used. Additionally, the present disclosure contemplates that the waveguides described herein may be defined with any cross-sectional shape suitable for transmitting optical signals.

The method 800 may further include defining a first adiabatic transition profile at Block 812 and a second adiabatic transition profile at Block 814. Defining the first adiabatic transition profile may include defining a portion of the waveguide adjacent the optoelectronic component so as to optimize optical coupling efficiency of optical signals between the waveguide and the optoelectronic component. In some embodiments, defining the first adiabatic transition profile includes defining a first cross-section proximate the optoelectronic component and a second cross-section distal the optoelectronic component. In such an embodiment, the second cross-section may be larger than the first cross-section such that the first adiabatic transition profile tapers along a length of the waveguide from the second cross-section to the first cross-section, as described above in connection with FIGS. 3-4B.

Defining the second adiabatic transition profile at Block 814 may include defining a portion of the waveguide adjacent the receiving surface so as to, in the operational configuration, optimize optical coupling efficiency of optical signals between the waveguide and the optical fiber (e.g., the fiber core) via the receiving surface. In some embodiments, defining the second adiabatic transition profile includes defining a first cross-section proximate the receiving surface and a second cross-section distal the receiving surface. In such an embodiment, the second cross-section may be larger than the first cross-section such that the second adiabatic transition profile tapers along a length of the waveguide from the second cross-section to the first cross-section, as described above in connection with FIGS. 3-4B.

In this way, the resultant optical interconnects of method 800 provide structurally distinct features not found in traditional waveguides. As noted above, traditional coupling between optical elements (e.g., butt coupling) requires a field emission between edges of the waveguide to accomplish a fiber-to-fiber coupling. The use of the adiabatic transition profiles of embodiments of the present invention, however, introduces a tapering cross-section of the waveguide profile along a propagation direction of the waveguide so as to provide more accurate alignment (e.g., high misalignment tolerance and improved mode matching) between the optoelectronic component and the waveguide as compared to conventional couplers.

Many modifications and other embodiments of the inventions set forth herein will come to mind to one skilled in the art to which these inventions pertain having the benefit of the teachings presented in the foregoing descriptions and the associated drawings. Although the figures only show certain components of the methods and systems described herein, it is understood that various other components may also be part of any optical component or optoelectronic element. In addition, the method described above may include fewer steps in some cases, while in other cases may include additional steps. Modifications to the steps of the method described above, in some cases, may be performed in any order and in any combination.

Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. An optical interconnect comprising:
a substrate;
an optoelectronic component supported by the substrate and configured to convert between optical and electrical signals; and
a transmission block, wherein the transmission block defines:
a receiving surface configured to receive an optical fiber, and
a waveguide configured to transmit optical signals between the optoelectronic component and the receiving surface such that in an operational configuration in which the receiving surface receives an optical fiber, the optoelectronic component and the optical fiber are in optical communication,
wherein the waveguide defines:
a first adiabatic transition profile adjacent the optoelectronic component configured to facilitate transmission of optical signals between the waveguide and the optoelectronic component, and
a second adiabatic transition profile adjacent the receiving surface configured to, in the operational configuration, facilitate transmission of optical signals between the waveguide and the optical fiber.

2. The optical interconnect according to Claim 1, wherein the first adiabatic transition profile defines a first cross-section proximate the optoelectronic component and a second cross-section distal the optoelectronic component and, wherein the second cross-section is larger than the first cross-section such that the first adiabatic transition profile tapers along a length of the waveguide from the second cross-section to the first cross-section.

3. The optical interconnect according to Claim 1, wherein the second adiabatic transition profile defines a first cross-section proximate the receiving surface and a second cross-section distal the receiving surface and, wherein the second cross-section is larger than the first cross-section such that the second adiabatic transition profile tapers along a length of the waveguide from the second cross-section to the first cross-section.

4. The optical interconnect according to Claim 1, further comprising a reflective surface disposed between the first adiabatic transition profile and the second adiabatic transition profile.

5. The optical interconnect according to Claim 4, wherein, in the operational configuration, the reflective surface is configured to redirect optical signals between the optoelectronic component and the receiving surface by approximately 90°.

6. The optical interconnect according to Claim 1, wherein the receiving surface further defines a V-shaped groove configured, in the operational configuration, to position the optical fiber relative to the second adiabatic transition profile.

7. The optical interconnect according to Claim 1, wherein the transmission block further comprises a cutout region proximate the optoelectronic component.

8. The optical interconnect according to Claim 1, wherein the optoelectronic component and substrate are configured as a flip-chip component such that a longitudinal axis of the first adiabatic transition profile and a longitudinal axis of the second adiabatic transition profile are collinear.

9. A method of manufacturing an optical interconnect, the method comprising:
providing a substrate;
providing a transmission block;
supporting an optoelectronic component on the substrate, wherein the optoelectronic component is configured to convert between optical and electrical signals;
defining a receiving surface in the transmission block, wherein the receiving surface is configured to receive an optical fiber; and
defining a waveguide in the transmission block, wherein the waveguide is configured to transmit optical signals between the optoelectronic component and the receiving surface such that in an operational configuration in which the receiving surface receives an optical fiber, the optoelectronic component and the optical fiber are in optical communication,
wherein the waveguide defines:
a first adiabatic transition profile adjacent the optoelectronic component configured to facilitate transmission of optical signals between the waveguide and the optoelectronic component, and
a second adiabatic transition profile adjacent the receiving surface configured to, in the operational configuration, facilitate transmission of optical signals between the waveguide and the optical fiber.

10. The method according to Claim 11, wherein the first adiabatic transition profile defines a first cross-section proximate the optoelectronic component and a second cross-section distal the optoelectronic component and, wherein the second cross-section is larger than the first cross-section such that the first adiabatic transition profile tapers along a length of the waveguide from the second cross-section to the first cross-section.

11. The method according to Claim 11, wherein the second adiabatic transition profile defines a first cross-section proximate the receiving surface and a second cross-section distal the receiving surface and, wherein the second cross-section is larger than the first cross-section such that the second adiabatic transition profile tapers along a length of the waveguide from the second cross-section to the first cross-section.

12. The method according to Claim 11, further comprising defining a reflective surface disposed between the first adiabatic transition profile and the second adiabatic transition profile.

13. The method according to Claim 14, wherein the reflective surface is defined, in the operational configuration, to redirect optical signals between the optoelectronic component and the receiving surface by approximately 90°.

14. The method according to Claim 11, wherein the receiving surface further defines a V-shaped groove configured, in the operational configuration, to position the optical fiber relative to the second adiabatic transition profile.

15. The method according to Claim 11, further comprising configuring the optoelectronic component and substrate as a flip-chip component such that a longitudinal axis of the first adiabatic transition profile and a longitudinal axis of the second adiabatic transition profile are collinear.
